# FASCICULE DE BREVET EUROPEEN

(11) **EP 1 205 358 B1**
(45) Date de publication et mention de la délivrance du brevet: **27.07.2005**
(21) Numéro de dépôt: 01460069.6
(22) Date de dépôt: 14.11.2001
(51) Int. Cl.: B60R 9/045

(54) **Barre de galerie pour véhicules automobiles, destinée à être montée sur des longerons non parrallèles**
Kraftfahrzeugquerholm zur Montage auf nichtparalleler Dachreling
Vehicle cross bar to be mounted on non-parallel roof racks

(30) Priorité: 14.11.2000 FR 0014663
(43) Date de publication de la demande: 15.05.2002
(73) Titulaire: WAGON SAS, 79300 Bressuire (FR)
(72) Inventeur: Neaux, Jean-Claude, 79300 Terves (FR)
(74) Mandataire: Vidon, Patrice

(56) Documents cités:
- EP-A- 0 664 241
- EP-A- 1 093 971
- DE-A- 3 043 970
- DE-A- 4 223 899
- DE-U- 8 804 994
- US-A- 5 071 050
- US-A- 5 758 810

## Description

Le domaine de l'invention est celui des galeries pour véhicules automobiles. Plus précisément, l'invention concerne les barres de galerie, destinées à être montées sur des longerons, ou des rails, prévus à cet effet sur le véhicule.

De tels systèmes sont généralement prévus pour équiper le pavillon des véhicules, par exemple de type break ou monospace. Ils peuvent également être montés sur une autre partie de la carrosserie (malle arrière ou hayon par exemple).

Souvent, les pavillons des véhicules comprennent un (ou plusieurs) emplacements prédéfinis équipés de moyens de réception et de fixation des pieds de la barre de galerie.

Une amélioration à cette technique a été proposée, qui consiste à équiper le pavillon de deux longerons parallèles, et perpendiculaires aux barres de galerie, de façon que ces dernières (ou au moins l'une d'entre elles) puissent coulisser longitudinalement sur le pavillon. Cela permet notamment de définir au moins deux positions :
- une position de travail, dans laquelle deux barres, une barre avant et une barre arrière, sont réparties de part et d'autre du pavillon ;
- une position de rangement, dans laquelle les deux barres sont rapprochées l'une de l'autre, par exemple de façon à former un aileron à l'arrière du pavillon.

Dans ce dernier cas, la barre arrière peut être fixe, seule la barre avant coulissant le long des longerons.

Dans une telle situation, il est possible de définir des barres de galerie adaptées aux véhicules, tant sur le plan esthétique que sur celui de la pénétration dans l'air. Les pieds de la barre de galerie peuvent être formés directement dans le prolongement de la traverse, et carénés, dans le même matériau et/ou le même coloris que la carrosserie.

Il arrive cependant sur certains véhicules, qu'il ne soit pas possible de prévoir des longerons longitudinaux parallèles sur le pavillon. Dans ce cas, on utilise généralement des barres de longueurs différentes, mises en place chacune à une position fixe unique prédéfinie.

On peut également revenir à des structures de barres de galerie de type plus ancien, dans lequel au moins un des pieds est coulissant le long de la traverse, de façon que l'on puisse modifier l'écartement entre les deux pieds.

Cette technique présente de nombreux inconvénients. Tout d'abord, les extrémités de la traverse de la barre de galerie ne peuvent plus être placées dans le prolongement même des pieds, puisque la position de ces derniers doit pouvoir varier le long de la traverse. Ces extrémités débordent donc au-dessus des pieds, ce qui est peu acceptable, selon les critères esthétiques actuels.

Par ailleurs, la manipulation de telles barres de galerie est très peu pratique, notamment par une personne seule. En effet, cette personne en voulant modifier la position de la barre de galerie doit :
- déverrouiller chacun des deux pieds, de part et d'autre du véhicule ;
- déplacer la barre de galerie, généralement en plusieurs temps, en se rendant à chaque fois de part et d'autre du véhicule ;
- régler la nouvelle position d'au moins un des pieds correspondant au nouvel écartement entre les longerons ;
- verrouiller les deux pieds sur les longerons.

On a également envisagé de réaliser des mécanismes de barres de galerie dont la longueur peut varier, mettant en oeuvre des articulations sur chaque pied, associées à des moyens coulissants. Cette approche est par exemple introduite dans le document EP-0 664 241.

Cette technique est séduisante sur le papier, mais présente plusieurs inconvénients en pratique. En effet, la présence de moyens coulissants et d'articulations nécessitent l'existence de jeux minimums, qui peuvent induire :
- des jeux même lorsque la barre est en position verrouillée sur le toit, notamment lorsque cette dernière est chargée, et donc une mauvaise sécurisation de l'ensemble ;
- des jeux en compression et/ou en traction, dans le sens vertical, lorsque la galerie est chargée, et donc une charge maximale réduite ;
- une détérioration rapide de l'ensemble, et notamment des blocage ou de casse des moyens coulissants et des articulations ;
- une difficulté pour bien positionner la barre, après qu'elle a été déplacée.

Par ailleurs, le nombre important de pièces mobiles, et donc de degrés de liberté, entraîne, outre les faiblesses listées ci-dessus, une évidente complexité de fabrication (nombre de pièces, montage, maintenance, ...) et en conséquence un coût de fabrication élevé.

Enfin, cette technique nécessite des manipulations successives de chaque pied, en obligeant l'utilisateur à se rendre de part et d'autre du véhicule, pour le déverrouillage de chaque pied, le déplacement de chaque pied, puis le verrouillage de chaque pied.

Une autre approche est proposée dans le document EP-1 093 971 correspondent au préambule de la revendication 1. Selon cette approche, les deux pieds de la barre de galerie sont liés, par l'intermédiaire de moyens de compensation de l'écartement entre ces deux pieds.

L'invention a notamment pour objectif de pallier ces différents inconvénients de l'état de l'art.

Plus précisément, un objectif de l'invention est de fournir une barre de galerie pouvant être aisément déplacée le long de deux longerons non parallèles par une personne seule, restant d'un seul côté du véhicule.

En d'autres termes, un objectif de l'invention est de fournir une barre de galerie ne nécessitant pas de manipulations complexes et/ou nombreuses pour la déplacer le long des longerons.

L'invention a également pour objectif de fournir une telle barre de galerie, qui soit efficace, sûre et capable de supporter une charge importante, et ce avec une bonne fiabilité dans le temps.

Notamment, un objectif de l'invention est de fournir une telle barre de galerie, qui reste à la fois aisément déplaçable, et fiable lorsqu'une charge est mise en place.

Un autre objectif de l'invention est de fournir une telle barre de galerie, qui soit adaptée aux exigences actuelles en matières d'esthétique, de carrosserie et de pénétration dans l'air. Par exemple, un objectif de l'invention est de permettre que la galerie obtenue puisse être transformée en un aileron, lorsqu'elle n'est pas utilisée.

Encore un autre objectif de l'invention est de fournir une telle barre de galerie, qui soit relativement simple et peu coûteuse à réaliser et à monter, tout en respectant, bien sûr, les contraintes de charges que la barre de galerie doit pouvoir supporter.

Ces objectifs, ainsi que d'autres qui apparaîtront par la suite, sont atteints à l'aide d'une barre de galerie pour véhicule automobile, du type comprenant une traverse et deux pieds de fixation montés aux extrémités de ladite traverse, dans le prolongement de cette dernière, lesdits pieds étant prévus pour coopérer avec des longerons de guidage et de maintien montés sur ledit véhicule automobile, et pouvant, dans une position de réglage, coulisser le long desdits longerons, l'angle formé entre ladite traverse et chacun desdits longerons restant sensiblement constant, lors du déplacement de la barre le long desdits longerons.

Selon l'invention, au moins un desdits pieds comprend un logement dans lequel une extrémité de ladite traverse peut coulisser entre deux positions extrêmes, de façon à s'adapter à un écartement variable entre lesdits longerons, ledit logement comprenant des premiers moyens de verrouillage susceptibles de coopérer avec des seconds moyens complémentaires de verrouillage portés par ladite traverse pour bloquer ou autoriser le déplacement de ladite extrémité de la traverse dans ledit logement.

Contrairement aux a priori de l'homme du métier, les inventeurs ont pu vérifié qu'il n'était pas nécessaire de prévoir des articulations dans chacun des pieds pour permettre le déplacement d'une barre le long de longerons non parallèles. Ce résultat surprenant permet d'obtenir une solution efficace et simple au problème posé par les longerons, ou rails, non parallèles.

On obtient ainsi une traverse de longueur variable ("traverse" s'entendant ici comme l'ensemble des éléments reliant les deux pieds), les pieds restant placés dans le prolongement des extrémités de la traverse. Il s'agit donc d'une solution avantageuse tant sur le plan fonctionnel que sur le plan esthétique.

La présence de pièces mobiles, permettant le coulissement, nécessite l'existence de jeux, qui fragilisent la barre. Cette dernière risque d'être soumise à des efforts en traction ou en compression, et de se détériorer ou de se bloquer, par exemple en présence de charges importantes.

Il apparaît donc souhaitable de prévoir des moyens bloquant et renforçant la barre, lorsqu'elle est en position de travail. La traverse est ainsi maintenue dans une configuration déterminée, et conserve une position fixe et sécurisée, quelles que soient les charges qu'elle supporte ou les chocs et à-coups engendrés par les déplacements du véhicule.

De façon avantageuse, lesdits seconds moyens de verrouillage portés par ladite traverse coopèrent, en position verrouillée, avec lesdits premiers moyens de verrouillage de façon à supprimer ou réduire le jeu transversal entre ladite traverse et les parois dudit logement.

On élimine ainsi certaines déformations, et notamment la traction ou la compression, possibles de la traverse par rapport aux pieds, sous l'effet d'une charge et de sa fixation. La barre est maintenue de façon ferme et renforcée dans ses logements.

De plus, on réduit considérablement les vibrations éventuelles, en particulier lorsque la barre n'est pas chargée.

Avantageusement, lesdits premiers moyens de verrouillage comprennent au moins un organe mâle (respectivement femelle) susceptible de coopérer, de façon complémentaire avec au moins un organe femelle (respectivement mâle) porté par la traverse.

En d'autres termes, on met en oeuvre un crabotage entre les deux organes. Bien entendu, de nombreuses autres techniques permettant d'assurer un auto-blocage entre au moins deux pièces, peuvent être utilisées (par exemple : mise en oeuvre de coins, d'excentriques, d'une forte pression,...).

Selon un mode de réalisation particulier, lesdits premiers et seconds moyens de verrouillage et/ou de renfort forment ainsi, en position verrouillée, un engrenage comprenant au moins une dent.

Notamment, lesdits premiers ou seconds moyens de verrouillage peuvent avantageusement comprendre au moins une crémaillère.

Le principe de la crémaillère permet d'offrir, sur toute sa longueur et donc en différentes positions, des moyens susceptibles de coopérer avec ceux portés par le logement en vue de verrouillage de la traverse.

Dans ce cas, ladite crémaillère est mobile transversalement (de bas en haut lorsque la barre est sur un pavillon de véhicule) par rapport à l'axe longitudinal de la traverse.

La crémaillère peut ainsi être déplacée entre deux positions correspondants aux modes verrouillé et déverrouillé, en différentes positions en fonction des variations de la position, c'est-à-dire de la longueur, de la traverse.

Dans ce mode de réalisation, préférentiellement, ladite crémaillère est mobile transversalement par rapport à l'axe longitudinal de la traverse.

Avantageusement, ladite traverse comprend un élément mobile susceptible de coulisser le long de ladite traverse, et coopérant avec ladite crémaillère de façon à l'entraîner entre sa position verrouillée et sa position déverrouillée, et réciproquement.

Ledit élément mobile peut alors avantageusement présenter au moins une rampe contre laquelle un ou plusieurs éléments support de ladite crémaillère sont susceptibles de prendre appui.

Selon une autre caractéristique préférentielle de l'invention, la barre de galerie comprend au moins un moyen d'actionnement du verrouillage/déverrouillage de ladite traverse, faisant saillie dans un évidement de ladite traverse ou de l'un desdits pieds.

Cette commande est avantageusement montée sur l'un des pieds, de façon à en permettre un usage aisé. On peut également prévoir qu'elle se trouve au milieu de la traverse, afin qu'elle soit accessible des deux côtés du véhicule. Une autre approche est de prévoir une commande sur chacun desdits pieds, l'une ou l'autre pouvant indifféremment être utilisée. Bien sûr, une commande sur chacun des pieds peut également être prévue.

De façon préférentielle, ledit moyen d'actionnement est couplé audit élément mobile par au moins un câble circulant à l'intérieur de ladite traverse. Le câble peut biens sûr être remplacée par une ou plusieurs tringles ou éléments similaires.

Avantageusement, la barre de galerie de l'invention comprend au moins un moyen d'actionnement agissant simultanément sur :
- le verrouillage/déverrouillage de ladite traverse dans ledit logement ;
- des moyens de blocage portés par au moins un desdits pieds de fixation de façon à autoriser ou interdire leur déplacement le long desdits longerons de guidage.

De façon avantageuse, ledit moyen d'actionnement contrôle le blocage des deux pieds de fixation.

Cette technique permet de passer du mode "barre bloquée" au mode "barre mobile", et réciproquement, en une seule opération. Pour des raisons de sécurité, une double commande et/ou une serrure peuvent bien sûr être prévues.

Dans ce cas, préférentiellement, ledit moyen d'actionnement est porté par un desdits pieds, et lesdits moyens de blocage du pied opposé sont solidaires desdits seconds moyens de verrouillage et/ou de renfort.

Selon un mode de réalisation particulier, on prévoit que ledit moyen d'actionnement est relié audit par un premier câble auxdits premiers ou seconds moyens de verrouillage, un second câble reliant lesdits premiers ou seconds moyens de verrouillage et/ou de renfort aux moyens de blocage desdit pied opposé.

Cette solution s'avère en effet efficace et simple à mettre en oeuvre.

Dans le cas où le second câble doit avoir une course plus courte que celle du premier câble, un élément de compensation peut être monté dans le prolongement dudit second câble.

Cet élément de compensation peut notamment être un ressort, ou tout élément élastique adapté. Il peut être monté au voisinage des moyens de verrouillage ou des moyens de blocage.

L'invention concerne également une galerie pour véhicule automobile, formée d'au moins deux barres de galerie, dont au moins l'une d'entre elles est une barre de galerie selon l'invention.

Selon un mode de réalisation particulier, on peut prévoir qu'une desdites barres de la galerie selon l'invention est fixe. Dans ce cas, si deux barres sont suffisantes, une seule est telle que décrit ci-dessus.

Avantageusement, lesdites barres de galerie peuvent être regroupées, par exemple à l'arrière du véhicule, pour former un aileron. On peut également prévoir des moyens permettant de les solidariser l'une à l'autre, notamment lorsqu'elle forme un aileron.

D'autres caractéristiques et avantages de l'invention apparaîtront plus clairement à la lecture de la description suivante de deux modes de réalisation préférentiels donnés à titre de simples exemples illustratifs et non limitatifs, et des dessins annexés parmi lesquels :
- les figures 1a et 1b illustrent le principe général de l'invention, selon lequel une extrémité de la traverse est mobile dans le logement ménagé sur le pied ;
- les figures 2 et 3 présentent un exemple de moyens de verrouillage de la barre des figures 1a et 1b, respectivement en modes déverrouillé et verrouillé ;
- la figure 4 montre de façon schématique un dispositif de commande adapté aux moyens de verrouillage des figures 2 et 3 ;
- les figures 5a et 5b illustrent les positions que peuvent prendre des barres de galeries selon l'invention, sur un toit de véhicule équipé de longerons non parallèles.

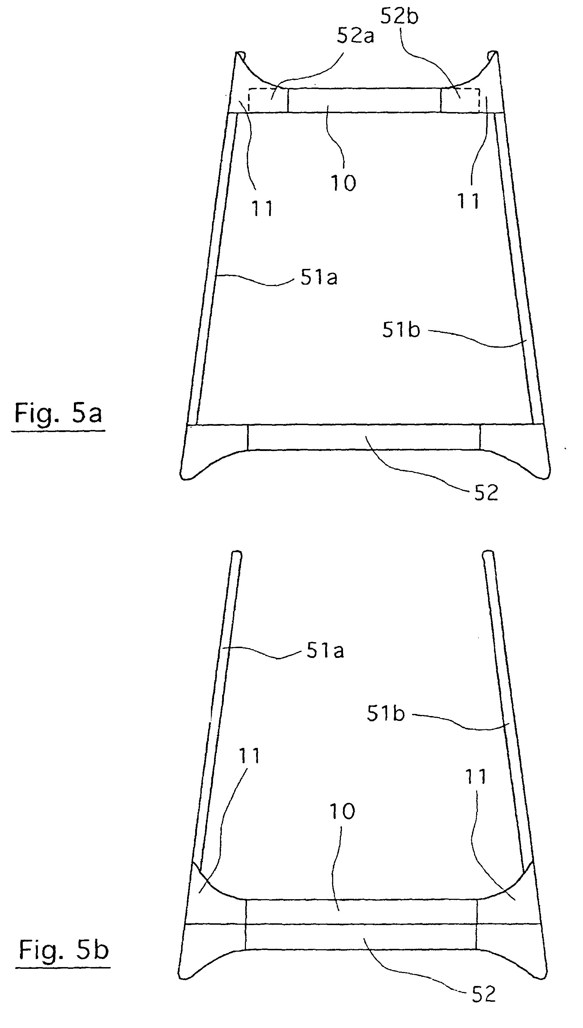

L'invention concerne donc une barre de galerie, mobile le long de deux longerons, ou rails, non parallèles, aménagés par exemple sur le pavillon d'un véhicule automobile, comme cela est illustré par les figures 5a et 5b.

Des longerons 51a et 51b sont montés à demeure sur le pavillon d'un véhicule. Ces deux longerons sont non parallèles et peuvent présenter, par exemple, un écart de l'ordre de 10 centimètres entre la partie la plus large (correspondant ici à l'arrière du véhicule, mais l'inverse est également possible) et la partie la plus étroite (avant du véhicule).

Dans cet exemple, la barre 52 située à l'arrière est fixe (non coulissante). Seule la barre avant 10 est mobile le long des longerons 51a et 51b de façon à pouvoir prendre :
- une position de travail (figure 5a) dans laquelle elle se trouve à proximité de la partie avant du véhicule de façon à former, avec la barre arrière 52, une galerie pouvant recevoir divers objets à transporter ;
- une position de repos (figure 5b) dans laquelle elle est rapprochée de la barre arrière 52, et éventuellement solidarisée avec cette dernière, de façon à former un aileron.

Bien entendu, l'invention s'applique également au cas où plusieurs barres sont mobiles.

Comme cela est développé par la suite, la barre mobile est conçue de façon que les extrémités 52a et 52b de la traverse pénètrent à l'intérieur des pieds 11. Il est bien sûr possible que ce principe ne soit mis en oeuvre que sur un seul pied.

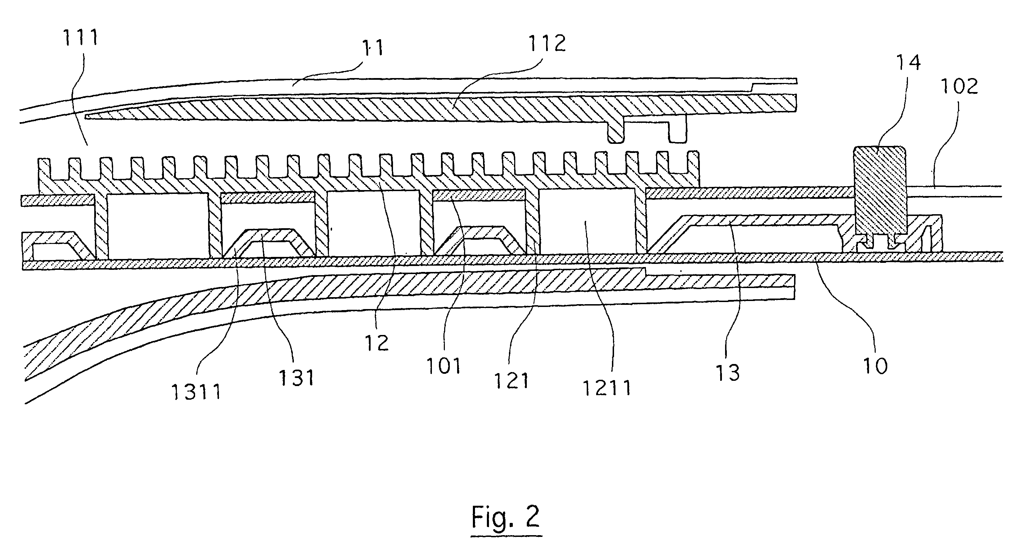

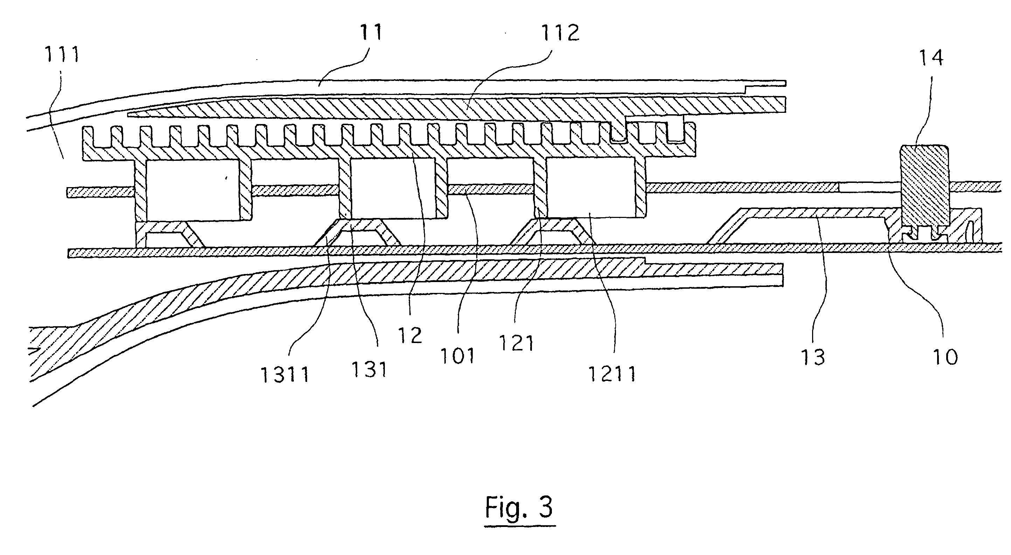

On notera par ailleurs que les figures 5a et 5b ne sont que des figures de principes, ne respectant bien sûr pas des critères d'échelle ou de faisabilité. Ainsi, on a volontairement "grossi" les extrémités de la traverse, dans le but de mieux faire comprendre le principe de l'invention. Les figures 2 et 3, discutées par la suite, sont en revanche sensiblement exactes.

Comme déjà mentionné, le fait que les longerons ne soient pas parallèles pose un problème : la longueur de la traverse de la barre doit pouvoir varier.

L'homme du métier était persuadé que cela nécessitait la réalisation de systèmes complexes, avec une articulation entre chaque pied et la traverse. Les inventeurs ont constaté que, contrairement à cet a priori et de façon surprenante, il n'est pas nécessaire de prévoir de telles articulations : des moyens permettant le coulissement d'au moins une extrémité de la traverse par rapport à au moins l'un des pieds sont suffisants. En d'autres termes, les inventeurs ont vérifié qu'il était possible de permettre un déplacement de la barre en maintenant constant l'angle formé entre la barre et chaque longeron.

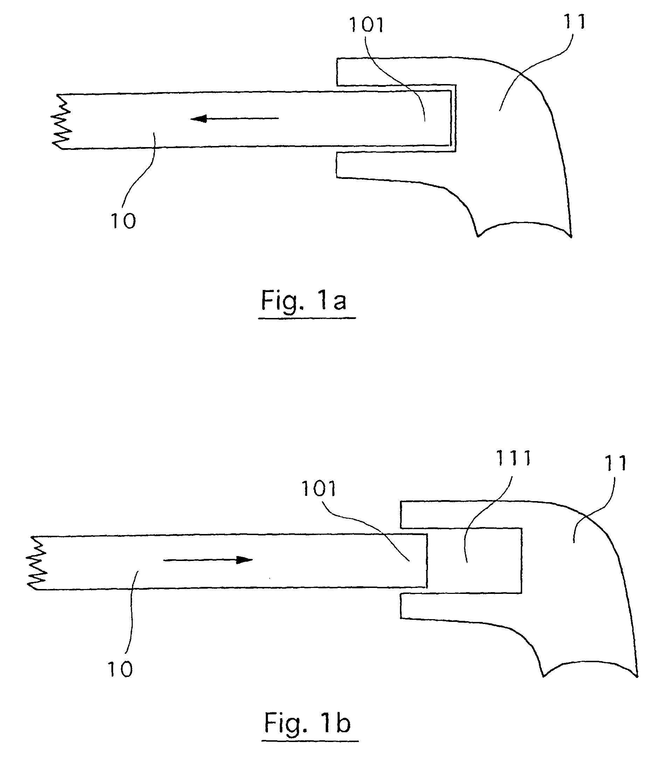

Les figures 1a et 1b illustrent donc le principe général de l'invention, selon lequel on rend possible les variations de longueur d'une barre de galerie en lui permettant de coulisser à l'intérieur d'au moins un de ses supports.

Ainsi, l'extrémité 101 du corps de la traverse 10 peut coulisser entre deux positions extrêmes dans un logement 111 prévu à cet effet dans le pied 11. De cette façon, l'extrémité 101 reste recouverte par le pied 11, ce qui est avantageux tant sur le plan esthétique que sur celui de la protection des pièces mobiles.

Ce mécanisme peut être mis en oeuvre sur un seul pied, ou sur les deux.

Bien entendu, la mise en oeuvre d'un tel système est plus solide et sûre qu'un système prévoyant une articulation, tout en étant plus simple à mettre en oeuvre. Cependant, elle suppose malgré tout l'existence de jeux minimums, permettant le mouvement de la traverse dans le pied et le déplacement de la barre.

Il existe donc un risque de détérioration dans le temps. En outre, ces jeux peuvent fragiliser la barre, en fonction du poids et de la position de la charge, et de son mode de fixation. Selon les cas, la traverse subit des efforts en compression et/ou en traction, qui risquent de nuire au bon fonctionnement du mécanisme.

En outre, par exemple sous l'effet d'une charge importante, la traverse peut, progressivement, s'affaisser, ce qui présente un danger important.

Selon un mode de réalisation particulier de l'invention, on prévoit donc des moyens de verrouillage qui, lorsque la barre est en position de travail, bloque et rigidifie cette dernière. Ces moyens sont donc prévus pour solidariser efficacement la traverse et le pied correspondant. Il s'agit de moyens réversibles, qui permettent un coulissement sans entrave en position de libération.

Ces moyens comprennent par exemple au moins un élément mâle complémentaire d'au moins un élément femelle, venant en prise en position de travail. Ils sont conçus avantageusement pour empêcher simultanément :
- le coulissement latéral de la barre dans le pied ;
- le déplacement transversal de la traverse (c'est-à-dire verticalement, ou sensiblement perpendiculairement au plan défini par le pavillon), afin de lutter contre la compression ou la traction due à une charge et sa fixation.

Ces moyens peuvent par exemple prendre la forme d'une crémaillère, ainsi que cela est illustré par les figures 2 et 3.

Sur ces figures, la traverse 10 coulisse donc dans le logement 111 du pied 11.

Ce pied 11 comprend des premiers moyens de verrouillage, par exemple sous la forme d'une pièce moulée 112 insérée et solidarisée, par exemple par collage, à l'intérieur du pied 11. Le pied 11 pourrait également être surmoulé sur la pièce 112.

Cette pièce 112 porte des dents 1121a et 1121b espacées l'une de l'autre, tant sur l'axe longitudinal du logement 111 que sur la largeur de celui-ci.

Ces dents 1121a et 1121b sont destinées à s'engrener avec des seconds moyens complémentaires de verrouillage, se présentant sous la forme d'une crémaillère 12 définissant une série de logements présentant un écartement approprié aux dimensions des dents 1121a et 1121b.

La crémaillère 12 est par exemple une pièce monobloc réalisée par moulage, et présente trois pieds 121 régulièrement espacés les uns des autres et définissant des évidements 1211.

La crémaillère peut ainsi prendre deux positions stables :
- une position de libération, illustrée par la figure 2, dans laquelle le coulissement de la traverse 10 par rapport au pied 11 est possible ;
- une position de verrouillage, illustrée par la figure 3, dans laquelle l'engrenage est en prise, empêchant le coulissement et renforçant la liaison pied - traverse (en supprimant tout jeu dans le sens vertical).

La crémaillère 12 est donc mobile transversalement, pour passer de la position de la figure 2 à celle de la figure 3, et réciproquement. Des moyens assurant ce déplacement, actionnés par l'utilisateur, sont donc prévus.

Il peut par exemple s'agir de plots 31, formés sur une pièce coulissante 13, et présentant un plan incliné 1311 prévu pour coopérer avec un pied 121 de la crémaillère.

Plus précisément, dans le mode de réalisation illustré, les pieds 121 de la crémaillère 12 sont insérés dans des ouvertures 101 ménagés dans le corps de la traverse. Les dimensions des évidements 101 sont conçus pour assurer un guidage en translation transversale des pieds 121 de la crémaillère 12, sans s'opposer à leur coulissement, c'est-à-dire en limitant les frottements avec les parois des pieds 121.

La crémaillère 12 a une longueur appropriée à la course potentielle de la traverse dans le logement 111. Il est bien entendu qu'en fonction des besoins, et notamment de la course recherchée, les dimensions de la crémaillère 12, le nombre de ses pieds 121 et le nombre des évidements 101 correspondants dans la traverse 10 peuvent être aisément adaptés.

A l'intérieur de la traverse 10 est insérée un élément mobile 13 susceptible d'être déplacé en glissant sur le fond de la traverse 10. Cet élément mobile 13 présente une largeur sensiblement correspondante à la largeur interne de la traverse 10 pour obtenir un guidage en translation satisfaisant, en ménageant toutefois un jeu approprié évitant tout frottement important.

L'élément mobile 13 présente une succession de plots 131 présentant au moins un bord incliné 1311. Ces plots sont dimensionnés pour pouvoir entrer ou sortir des évidements 1211 des pieds 121 de la crémaillère 12.

Ainsi, l'élément mobile 13 peut coopérer avec la crémaillère 12 de façon à l'entraîner entre une position de verrouillage et une position de déverrouillage, et réciproquement.

Un organe d'actionnement 14 est solidarisé à l'élément mobile 13, faisant saillie dans un évidement 102 ménagé dans la traverse 10. L'organe d'actionnement 14 peut être déplacé par l'utilisateur sur la longueur de l'évidement 102 entre deux positions extrêmes selon lesquelles on verrouille la traverse 10 dans le logement 111 (figure 3) ou on la déverrouille (figure 2).

Comme discuté par la suite, d'autres modes d'actionnement sont possibles.

Les étapes du fonctionnement d'une telle barre vont maintenant être décrites plus en détail.

Partant d'une configuration initiale dans laquelle le dispositif est déverrouillé (figure 2), la barre de galerie peut être déplacée le long des longerons 51a et 51b pour aller d'une position correspondant à la figure 5a vers une position correspondant à la figure 5b, ou inversement.

On notera que, selon une caractéristique essentielle de l'invention, l'utilisateur peut déplacer l'ensemble de la barre de galerie en restant d'un seul côté du véhicule.

Au fur et à mesure que l'utilisateur déplace la barre de galerie le long des longerons, la longueur de la traverse varie pour s'adapter à l'écartement des longerons, la traverse 10 coulissant librement dans le logement 111 du ou des pieds 11, tout en conservant un angle fixe avec les longerons.

Quand la barre a atteint la position souhaitée par l'utilisateur, celui-ci intervient alors sur l'organe d'actionnement 14 de façon à l'amener dans la position indiquée sur la figure 3 en vue de verrouiller le dispositif. Avantageusement, cette opération est automatique, par simple relâchement de la pression imprimée sur l'organe d'actionnement.

L'organe 14 étant solidaire de la pièce de coulissement 13, celle-ci, et en particulier les plots 131, est déplacée vers l'intérieur du logement.

Les bords inclinés 1311 des plots 131 forment une rampe sur laquelle les pieds 121 de la crémaillère prennent appui. Un déplacement vers le haut est par conséquent imposé à la crémaillère 12. Les dents 122 de la crémaillère s'engrènent alors avec les dents 1121a et 1121b solidaires du pied 11.

A l'issue de cette opération, le mode verrouillé est atteint. Le jeu transversal existant en mode déverrouillé entre la traverse et les différents éléments qu'elle porte d'une part et les parois du logement 11 d'autre part, est alors supprimé. On obtient ainsi un renfort de la traverse dans le logement du pied.

Le déverrouillage de l'ensemble s'obtient symétriquement, par une cinématique inverse.

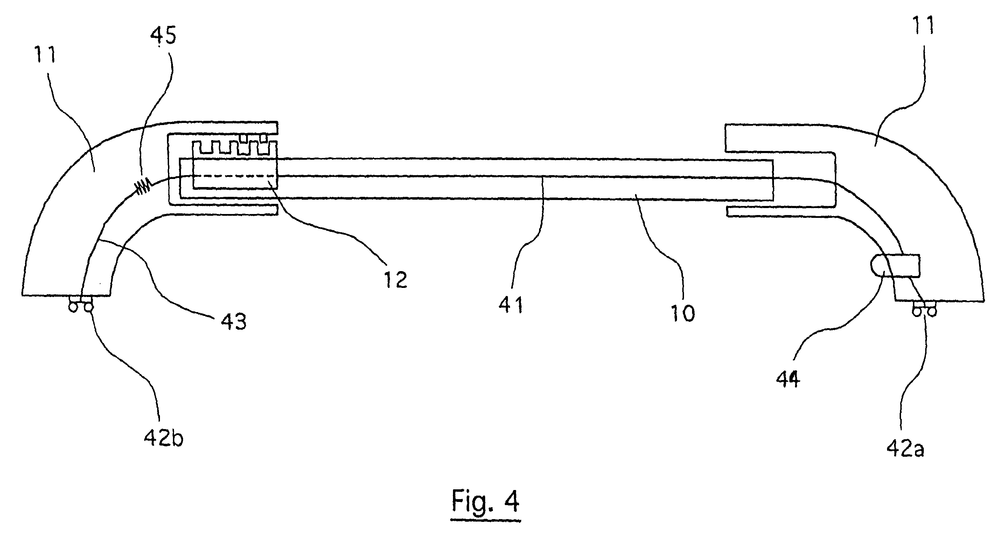

Selon une autre approche, la commande de verrouillage peut peut-être intégrée à l'un des pieds, par exemple, selon la technique illustrée en figure 4. Dans ce cas, avantageusement, la même commande sort au déverrouillage des pieds dans les longerons. Ainsi, avec une seule commande, et en une seule opération, on peut passer de la position de travail (barre immobilisée) à la position libérée (barre mobile).

De préférence, la commande revient automatiquement en position de travail. Dans ce cas, il est nécessaire de maintenir la commande en position actionnée pour déplacer la barre.

Dès que la commande est relâchée, l'ensemble des éléments revient en position de travail.

Cet emplacement de la commande simplifie encore la mise en oeuvre de l'invention, en permettant de rester du même côté du véhicule pour toutes les opérations.

Dans l'exemple illustré par la figure 4, on prévoit un organe d'actionnement 44, logé à l'intérieur de l'un des pieds. Il s'agit d'une part sur les éléments 42a permettant le déplacement de la barre dans le longeron correspondant. Il peut par exemple s'agir de patins à rouleaux.

Simultanément, l'actionnement de l'organe 44 agit sur un câble 41 qui circule dans la traverse 10, jusqu'à la pièce coulissante 13 (ou un élément similaire), permettant de faire passer la crémaillère de la position de la figure 3 à celle de la figure 2.

Un second câble 43 est prévu, pour agir sur les éléments 421 de l'autre pied. Ce câble 43 est relié à la pièce coulissante 13, qui répercute l'action du premier câble 41.

Il est possible que les courses prévues pour le déglacement de la crémaillère et le déverrouillage des éléments 42b soient différentes (la seconde course étant en général plus faible). On prévoit donc un élément de compensation 45, par exemple sous la forme d'un ressort ou d'une pièce élastique, de façon que la seconde course soit effectivement plus réduite.

Bien entendu, les câbles peuvent être remplacés par d'autres moyens de transmission, tels que par exemple des tringles.

Bien que l'on a décrit une galerie destinée à équiper le pavillon d'un véhicule, il est clair que le même dispositif peut être monté en tout emplacement adéquat sur le véhicule (par exemple la malle arrière ou le hayon).

Sur une galerie, il n'est pas obligatoire que toutes les barres soient telles que décrit ci-dessus. Notamment, on peut prévoir une barre fixe, notamment à l'arrière du véhicule, et une barre mobile, qui vient se solidariser à la barre fixe pour former un aileron.

Inversement, il peut y avoir plus de deux barres, si nécessaire, du fait de la longueur à couvrir et/ou de la charge à supporter.

## Revendications

1. Barre de galerie pour véhicule automobile, du type comprenant une traverse (10) et deux pieds de fixation (11) montés aux extrémités de ladite traverse (10), dans le prolongement de cette dernière, lesdits pieds (11) étant prévus pour coopérer avec des longerons (51a, 51b) de guidage et de maintien montés sur ledit véhicule automobile, et pouvant, dans une position de réglage, coulisser le long desdits longerons (51a, 51b), l'angle formé entre ladite traverse (10) et chacun desdits longerons (51a, 51b) restant sensiblement constant, lors du déplacement de la barre le long desdits longerons (51a, 51b),
**caractérisée en ce qu'**au moins un desdits pieds (10) comprend un logement (111) dans lequel une extrémité (101) de ladite traverse (10) peut coulisser entre deux positions extrêmes, de façon à s'adapter à un écartement variable entre lesdits longerons (51a, 51b),
ledit logement (111) comprenant des premiers moyens de verrouillage (112) susceptibles de coopérer avec des seconds moyens (12) complémentaires de verrouillage portés par ladite traverse (10), en venant en prise pour bloquer le déplacement de ladite extrémité (101) de la traverse dans ledit logement (111), et en étant désolidarisés pour autoriser ce déplacement.

2. Barre de galerie selon la revendication 1, **caractérisée en ce que** lesdits seconds moyens de verrouillage (12) portés par ladite traverse coopèrent, en position verrouillée, avec lesdits premiers moyens de verrouillage (112) de façon à supprimer ou réduire le jeu transversal entre ladite traverse (10) et les parois dudit logement.

3. Barre de galerie selon l'une quelconque des revendications 1 et 2, **caractérisée en ce que** lesdits premiers moyens de verrouillage (112) comprennent au moins un organe mâle (respectivement femelle) susceptible de coopérer, de façon complémentaire avec au moins un organe femelle (respectivement mâle) porté par la traverse (10).

4. Barre de galerie selon l'une quelconque des revendications 1 à 3, **caractérisée en ce que** lesdits premiers et seconds moyens de verrouillage (112, 12) forment, en position verrouillée, un engrenage comprenant au moins une dent.

5. Barre de galerie selon l'une quelconque des revendications 1 à 4, **caractérisée en ce que** lesdits premiers ou seconds moyens de verrouillage (112, 12) comprennent au moins une crémaillère.

6. Barre de galerie selon la revendication 5, **caractérisée en ce que** ladite crémaillère (12) est mobile transversalement par rapport à l'axe longitudinal de la traverse (10).

7. Barre de galerie selon l'une quelconque des revendications 5 et 6, **caractérisée en ce que** ladite traverse (10) comprend un élément mobile (13) susceptible de coulisser le long de ladite traverse (10), et coopérant avec ladite crémaillère (12) de façon à l'entraîner entre sa position verrouillée et sa position déverrouillée, et réciproquement.

8. Barre de galerie selon la revendication 7, **caractérisée en ce que** ledit élément mobile (13) présente au moins une rampe (1311) contre laquelle un ou plusieurs éléments (121) support de ladite crémaillère sont susceptibles de prendre appui.

9. Barre de galerie selon l'une quelconque des revendications 1 à 8, **caractérisée en ce qu'**elle comprend au moins un moyen (14, 44) d'actionnement du verrouillage/déverrouillage de ladite traverse (10), faisant saillie dans un évidement de ladite traverse (10) ou de l'un desdits pieds (11).

10. Barre de galerie selon la revendication 9, **caractérisée en ce que** ledit moyen (44) d'actionnement est couplé audit élément mobile par au moins un câble (41) circulant à l'intérieur de ladite traverse (10).

11. Barre de galerie selon l'une quelconque des revendications 1 à 10, **caractérisée en ce qu'**elle comprend au moins un moyen d'actionnement (44) agissant simultanément sur :
- le verrouillage/déverrouillage de ladite traverse (10) dans ledit logement ;
- des moyens de blocage (42a, 42b) portés par au moins un desdits pieds de fixation (11) de façon à autoriser ou interdire leur déplacement le long desdits longerons de guidage.

12. Barre de galerie selon la revendication 11, **caractérisée en ce que** ledit moyen d'actionnement (44) contrôle le blocage des deux pieds (11) de fixation.

13. Barre de galerie selon la revendication 12, **caractérisé en ce que** ledit moyen d'actionnement (44) est porté par un desdits pieds (11), et **en ce que** lesdits moyens de blocage (42b) du pied opposé sont solidaires desdits seconds moyens (12) de verrouillage.

14. Barre de galerie selon la revendication 13, **caractérisé en ce que** ledit moyen d'actionnement (44) est relié par un premier câble (41) auxdits premiers ou seconds moyens de verrouillage (12), un second câble (43) reliant lesdits premiers ou seconds moyens de verrouillage aux moyens de blocage (42b) dudit pied opposé.

15. Barre de galerie selon la revendication 14, **caractérisé en ce que** un élément de compensation (45) est monté dans le prolongement dudit second câble (43), de façon que la course dudit second câble (43) soit plus courte que celle du premier câble (41).

16. Galerie pour véhicule automobile, formée d'au moins deux barres de galerie, **caractérisée en ce qu'**au moins l'une d'entre elles est une barre de galerie selon l'une quelconque des revendications 1 à 15.

17. Galerie selon la revendication 16, **caractérisée en ce qu'**une desdites barres est fixe.

18. Galerie selon l'une quelconque des revendications 16 ou 17, **caractérisée en ce que** lesdites barres de galerie peuvent être regroupées pour former un aileron.

## Claims

1. Luggage rack bar for a motor vehicle, of the type comprising a cross member (10) and two securing feet (11) which are fitted at the ends of the said cross member (10), in the extension of the latter, the said feet (11) being designed to co-operate with guiding and retention side members (51a, 51b) which are fitted on the said motor vehicle, and which feet, in an adjustment position, can slide along the said side members (51a, 51b), the angle formed between the said cross member (10) and each of the said side members (51a, 51b) being substantially constant during the displacement of the bar along the said side members (51a, 51b), **characterised in that** at least one of the said feet (10) comprises a receptacle (111) in which one end (101) of the said cross member (10) can slide between two end positions, such as to adapt to variable spacing between the said side members (51a, 51b), the said receptacle (111) comprising first locking means (112) which can co-operate with second complementary locking means (12) which are supported by the said cross member (10) and engage in order to stop the displacement of the said end (101) of the cross member in the said receptacle (111), whilst being released in order to permit this displacement.

2. Luggage rack bar according to claim 1, **characterised in that** the said second locking means (12), which are supported by the said cross member, co-operate, in the locked position, with the said first locking means (112) such as to eliminate or reduce the transverse play between the said cross member (10) and the walls of the said receptacle.

3. Luggage rack bar according to claim 1 and claim 2, **characterised in that** the said first locking means (112) comprise at least one male (or respectively female) unit which can co-operate in a complementary manner with at least one female (or respectively male) unit supported by the cross member (10).

4. Luggage rack bar according to any one of claims 1 to 3, **characterised in that**, in the locked position, the said first and second locking means (112, 12) form a gear comprising at least one tooth.

5. Luggage rack bar according to any one of claims 1 to 4, **characterised in that** the said first and second locking means (112, 12) comprise at least one rack.

6. Luggage rack bar according to claim 5, **characterised in that** the said rack (12) is mobile transversely relative to the longitudinal axis of the cross member (10).

7. Luggage rack bar according to claim 5 and claim 6, **characterised in that** the said cross member (10) comprises a mobile element (13) which can slide along the said cross member (10) and co-operates with the said rack (12) such as to entrain it between its locked position and its unlocked position and vice versa.

8. Luggage rack bar according to claim 7, **characterised in that** the said mobile element (13) has at least one ramp (1311) against which one or a plurality of support elements (121) for the said rack can be supported.

9. Luggage rack bar according to any one of claims 1 to 8, **characterised in that** it comprises at least one means (44) for activating locking/unlocking of the said cross member (10) which projects into a recess in the said cross member (10) or into one of the said feet (11).

10. Luggage rack bar according to claim 9, **characterised in that** the said activating means (44) is connected to the said mobile element by at least one cable (41) which circulates inside the said cross member (10).

11. Luggage rack bar according to any one of claims 1 to 10, **characterised in that** it comprises at least one activating means (44) which acts simultaneously on:
- the locking/unlocking of the said cross member (10) in the said receptacle; and
- locking means (42a, 42b) which are supported by at least one of the said securing feet (11), such as to permit or prevent displacement of the latter along the said guiding side members.

12. Luggage rack bar according to claim 11, **characterised in that** the said activating means (44) controls the stopping of the two securing feet (11).

13. Luggage rack bar according to claim 12, **characterised in that** the said activating means (44) is supported by one of the said feet (11), and **in that** the said means (42b) for stopping the opposite foot are integral with the said second locking means (12).

14. Luggage rack bar according to claim 13, **characterised in that** the said activating means (44) is connected by a first cable (41) to the said first or second locking means (12), a second cable (43) connecting the said first or second locking means to the stopping means (42b) for the said opposite foot.

15. Luggage rack bar according to claim 14, **characterised in that** a compensation element (45) is fitted in the extension of the said second cable (43), such that the path of the said second cable (43) is shorter than that of the first of the first cable (41).

16. Luggage rack for a motor vehicle, formed by at least two luggage rack bars, **characterised in that** at least one of the latter is a luggage rack bar according to any one of claims 1 to 15.

17. Luggage rack according to claim 16, **characterised in that** one of the said bars is fixed.

18. Luggage rack according to claim 16 or claim 17, **characterised in that** the said luggage rack bars can be grouped in order to form a spoiler.

## Patentansprüche

1. Stange für Fahrzeug-Dachträger, die einen Querstreben (10) und zwei an den Enden dieses Querstrebens (10) und in der Verlängerung desselben angebrachte Befestigungsfüße (11) umfasst, wobei diese Füße (11) so ausgebildet sind, dass sie mit an dem Fahrzeug angebrachten Führungs- und Halterungslängsträgem (51a, 51b) zusammenwirken und in einer Einstellungsposition entlang dieser Längsträger (51a, 51b) gleiten können, wobei der zwischen dem Querstreben (10) und jedem dieser Längsträger (51a, 51b) gebildete Winkel beim Bewegen der Stange entlang der Längsträger (51a, 51b) in etwa konstant bleibt,
**dadurch gekennzeichnet, dass** mindestens einer dieser Füße (11) eine Aussparung (111) umfasst, in die das Ende (101) des Querstrebens (10) zwischen zwei Extremstellungen gleiten kann, um sich einem variablen Abstand zwischen den Längsträgern (51a, 51b) anzupassen,
wobei diese Aussparung (111) erste Verriegelungsmittel (112) aufweist, die mit zweiten, zusätzlichen Verriegelungsmitteln (12) zusammenwirken, welche vom Querstreben (10) getragen werden und so wirken, dass sie die Bewegung des Endes (101) des Querstrebens in der Aussparung (111) blockiert und, wenn sie getrennt sind, diese Bewegung zulassen.

2. Stange für Fahrzeug-Dachträger nach Anspruch 1,
**dadurch gekennzeichnet, dass** die vom Querstreben getragenen zweiten Verriegelungsmittel (12) in verriegelter Position mit den ersten Verriegelungsmitteln (112) so zusammenwirken, dass sie das seitliche Spiel zwischen dem Querstreben (10) und den Seitenwänden der Aussparung ganz verhindern oder verringern.

3. Stange für Fahrzeug-Dachträger nach einem der Ansprüche 1 oder 2,
**dadurch gekennzeichnet, dass** die ersten Verriegelungsmittel (112) mindestens ein männliches (bzw. weibliches) Element aufweisen, das in zusätzlicher Weise mit mindestens einem vom Querstreben (10) getragenen weiblichen (bzw. männlichen) Element zusammenwirkt.

4. Stange für Fahrzeug-Dachträger nach einem der Ansprüche 1 bis 3,
**dadurch gekennzeichnet, dass** die ersten und zweiten Verriegelungsmittel (112, 12) in der verriegelten Position ein Zahngetriebe mit mindestens einem Zahn bilden.

5. Stange für Fahrzeug-Dachträger nach einem der Ansprüche 1 bis 4,
**dadurch gekennzeichnet, dass** die ersten oder zweiten Verriegelungsmittel (112, 12) mindestens eine Zahnstange umfassen.

6. Stange für Fahrzeug-Dachträger nach Anspruch 5,
**dadurch gekennzeichnet, dass** die Zahnstange (12) seitlich im Verhältnis zur Längsachse des Querstrebens (10) beweglich ist.

7. Stange für Fahrzeug-Dachträger nach einem der Ansprüche 5 oder 6,
**dadurch gekennzeichnet, dass** der Querstreben (10) ein bewegliches Element (13) aufweist, das in der Lage ist, entlang des Querstrebens (10) zu gleiten und mit der Zahnstange (12) zusammenzuwirken, um sie zwischen der verriegelten und der entriegelten Position, und umgekehrt, mitzunehmen.

8. Stange für Fahrzeug-Dachträger nach Anspruch 7,
**dadurch gekennzeichnet, dass** das bewegliche Element (13) mindestens eine Schräge (1311) aufweist, gegen welche ein Trägerelement oder mehrere Trägerelemente (121) der Zahnstange sich abstützen kann bzw. können.

9. Stange für Fahrzeug-Dachträger nach einem der Ansprüche 1 bis 8,
**dadurch gekennzeichnet, dass** sie mindestens ein Mittel (14, 44) zum Betätigen der Verriegelung/Entriegelung des Querstrebens (10) umfasst, das in eine Aussparung des Querstrebens (10) oder eines der Füße (11) hineinragt.

10. Stange für Fahrzeug-Dachträger nach Anspruch 9,
**dadurch gekennzeichnet, dass** das Mittel zum Betätigen (44) über mindestens ein innerhalb des Querstrebens (10) laufendes Kabel (41) mit dem beweglichen Element gekoppelt ist.

11. Stange für Fahrzeug-Dachträger nach einem der Ansprüche 1 bis 10,
**dadurch gekennzeichnet, dass** sie mindestens ein Betätigungsmittel (44) umfasst, das gleichzeitig auf die folgenden Elemente wirkt:
- die Verriegelung/Entriegelung des Querstrebens (10) in der erwähnten Aussparung;
- Mittel zum Blockieren (42a, 42b), die von mindestens einem der Befestigungsfüße (11) derart getragen werden, dass sie die Bewegung der Füße entlang der Führungslängsträger zulassen oder verhindern.

12. Stange für Fahrzeug-Dachträger nach Anspruch 11,
**dadurch gekennzeichnet, dass** das Betätigungsmittel (44) das Blockieren der zwei Befestigungsfüße (11) steuert.

13. Stange für Fahrzeug-Dachträger nach Anspruch 12,
**dadurch gekennzeichnet, dass** das von einem der Füße (11) getragene Betätigungsmittel (44) und die Mittel zum Blockieren (42b) des entgegengesetzten Fußes mit den zweiten Verriegelungsmitteln (12) verbunden sind.

14. Stange für Fahrzeug-Dachträger nach Anspruch 13,
**dadurch gekennzeichnet, dass** das Betätigungsmittel (44) über ein erstes Kabel (41) mit den erwähnten ersten oder zweiten Verriegelungsmittel (12) verbunden ist, wobei ein zweites Kabel (43) die erwähnten ersten oder zweiten Verriegelungsmittel mit den Mitteln zum Blockieren (42b) des entgegen gesetzten Fußes verbindet.

15. Stange für Fahrzeug-Dachträger nach Anspruch 14,
**dadurch gekennzeichnet, dass** ein Ausgleichselement (45) auf der Verlängerung des erwähnten zweiten Kabels (43) angebracht ist, so dass der Lauf dieses zweiten Kabels (43) kürzer als der des ersten Kabels (41) ist.

16. Fahrzeug-Dachträger, gebildet aus mindestens zwei Dachträgerstangen,
**dadurch gekennzeichnet, dass** mindestens eine davon eine Dachträgerstange nach einem der Ansprüche 1 bis 15 ist.

17. Fahrzeug-Dachträger nach Anspruch 16,
**dadurch gekennzeichnet, dass** eine der erwähnten Stangen fest ist.

18. Fahrzeug-Dachträger nach einem der Ansprüche 16 oder 17,
**dadurch gekennzeichnet, dass** die Dachträgerstangen zu einem flügelförmigen Gebilde zusammengefügt werden können.
